# EUROPÄISCHE PATENTSCHRIFT

(11) **EP 2 944 486 B1**
(45) Veröffentlichungstag und Bekanntmachung des Hinweises auf die Patenterteilung: **15.06.2016**
(21) Anmeldenummer: 15165998.4
(22) Anmeldetag: 30.04.2015
(51) Int. Cl.: B60H 1/00, F25B 45/00

(54) **VORRICHTUNG UND VERFAHREN ZUM WARTEN EINER KLIMAANLAGE**
DEVICE AND METHOD FOR MAINTENANCE OF AN AIR CONDITIONER
DISPOSITIF ET PROCÉDÉ D'ENTRETIEN D'UNE CLIMATISATION

(30) Priorität: 12.05.2014 AT 503312014
(43) Veröffentlichungstag der Anmeldung: 18.11.2015
(73) Patentinhaber: AVL DiTest GmbH, 8020 Graz (AT)
(72) Erfinder: Kerschenbauer, Peter, 8250 Vorau (AT)
(74) Vertreter: Patentanwälte Pinter & Weiss OG

(56) Entgegenhaltungen:
- EP-A1- 2 051 028
- EP-A2- 2 365 261
- US-A- 4 539 817
- US-A- 5 167 126

## Beschreibung

Die Erfindung betrifft eine Vorrichtung zum Warten einer Klimaanlage, insbesondere für Klimaanlagen, die als Kältemittel C0₂ bzw. R744 nutzen, wobei die Vorrichtung einen niederdruckseitigen Bereich, der über eine niederdruckseitige Kupplung an einen Serviceanschluss an der Niederdruckseite der Klimaanlage anschließbar ist, und einen hochdruckseitigen Bereich, der über eine hochdruckseitige Kupplung an einen Serviceanschluss an der Hochdruckseite der Klimaanlage anschließbar ist, aufweist, wobei zwischen dem niederdruckseitigen Bereich und dem hochdruckseitigen Bereich, ein Kompressor vorgesehen ist. Weiters betrifft die Erfindung ein Verfahren zum Betreiben eins Servicegeräts für Klimaanlagen.

Unabhängig vom verwendeten Kältemittel hat ein Klimaanlagenservice die Aufgabe, die Klimaanlage zu entleeren, zu evakuieren und danach mit der richtigen Kältemittelmenge und Ölmenge wieder zu befüllen. Moderne Servicegeräte, wie sie etwa für KFZ-Klimaanlagen verwendet werden, weisen üblicher Weise zwei Serviceanschlüsse auf, wobei der eine an die Hochdruckseite der Klimaanlage angeschlossen wird, und der andere an die Niederdruckseite. Dadurch wird ein Kreislauf gebildet, der üblicher Weise vom niederdruckseitigen Anschluss über einen Ölabscheider, einen Verdampfer, einen Kompressor und einen Verflüssiger zum hochdruckseitigen Anschluss führt. Im Servicegerät sind weiters Entleer- und Befülleinrichtungen zum Absaugen des Gemischs aus Kältemittel und Kompressoröl aus dem Kältemittelkreislauf und zu Wiederauffüllen der Klimaanlage mit Kältemittel und Kompressoröl vorgesehen. Dabei wird in einer ersten Phase das Kreislaufgemisch über eine Trennstufe, z. B. einen Ölabscheider oder einen Filter, abgesaugt. Danach wird das Kreislaufsystem mittels einer Vakuumpumpe weitgehend restentleert und dann dem System aus einem Vorratsbehältnis neues Kältemittel und Frischöl zugeführt.

Systeme und Verfahren zur Wartung von Klimaanlagen sind beispielsweise aus WO 2011/088831 A1, DE 202008003123 U1, oder DE 102009054436 A1 bekannt.

Eine Vorrichtung gemäß Oberbegriff des Anspruchs 1 wird durch die US5167126 offenbart.

Beim Entleeren des Klimaanlagenkreislaufs liegt ein Problem darin, dass das Kältemittel bei einer raschen Entspannung im Nassdampfbereich unterhalb einer Druckschwelle erstarren kann. Bei C0₂ bzw. R744 als Kältemittel liegt die Schwelle, bei der das C0₂ im Nassdampfbereich zu Trockeneis erstarrt, bei einem Druck von 5,18 Bar. Um ein Vereisen des C0₂ zu vermeiden kann daher in einem ersten Schritt eine Entspannung auf etwa 18 Bar durchgeführt werden, und danach wartet man, bis das C0₂ im Fahrzeug vollständig verdampft ist, bevor die Absaugung fortgesetzt werden kann.

Der gegenständlichen Erfindung liegt die Idee zugrunde, eine Vorrichtung und ein Verfahren zu schaffen, durch die die obengenannten Probleme des Standes der Technik gelindert wer den. Insbesondere soll die Zeit, die zum Entleeren der Klimaanlage erforderlich ist, durch die Erfindung verkürzt werden.

Erfindungsgemäß werden diese und weitere Ziele durch eine eingangs genannte Vorrichtung gelöst, bei welcher zwischen dem Kompressor und dem hochdruckseitigen Bereich ein Überdruckbereich vorgesehen ist, der über ein Drosselorgan mit dem hochdruckseitigen Bereich verbunden ist. Der erzielbare Überdruck erlaubt eine effektivere verfahrenstechnische Nutzung des Bereichs außerhalb der Nassdampfkurve des Kältemittels auf der Gasseite des Phasendiagramms. Als Drosselorgan wird im Zusammenhang mit dieser Erfindung eine beliebige Vorrichtung bezeichnet, die die druckregelnde Funktion einer Drossel ausüben kann. Dazu zählen beispielsweise ein Expansionsventil, eine Festdrossel, ein Orifice mit oder ohne Bypass, etc.

In vorteilhafter Weise kann an den niederdruckseitigen Bereich eine Vakuumpumpe angeschlossen sein, mit der das Fluidsystem der Anlage oder einzelne Bereiche davon evakuiert werden können.

In einer vorteilhaften Ausführungsform der Erfindung kann von der niederdruckseitigen Kupplung ausgehend mittels Ventilen eine Umlauf-Fluidverbindung über den niederdruckseitigen Bereich, den Kompressor, den Überdruckbereich, das Drosselorgan, und den hochdruckseitigen Bereich zu der hochdruckseitigen Kupplung freigebbar sein. Diese Umlauf-Fluidverbindung erlaubt es, in einem Kreislaufprozess das im System befindliche Kühlmittel sehr schnell so zu konditionieren, dass beim Ablassen eine Bildung von Trockeneis verhindert wird.

In einer weiteren vorteilhaften Ausführungsform kann in einem Vorratsbereich ein Vorratsbehälter vorgesehen sein, der über Ventile an den Überdruckbereich und/oder den niederdruckseitigen Bereich anschließbar ist. Der Vorratsbehälter ist dabei sowohl zum Speichern des Abgepumpten Kühlmittels, als auch zum Bereitstellen des einzupumpenden Kühlmittels verwendbar.

Weiters kann in vorteilhafter Weise von der niederdruckseitigen Kupplung ausgehend mittels Ventilen eine Abpump-Fluidverbindung über den niederdruckseitigen Bereich, den Kompressor und den Überdruckbereich zu dem Vorratsbehälter freigebbar sein. Aus der Klimaanlage abgesaugtes Kühlmittel kann dadurch aufbereitet und zur Wiederverwertung in dem Vorratsbehälter gespeichert werden.

In einer weiteren vorteilhaften Weise kann von dem Vorratsbehälter ausgehend mittels Ventilen eine Einpump-Fluidverbindung über den Kompressor, den Überdruckbereich und den hochdruckseitigen Bereich zu der hochdruckseitigen Kupplung freigebbar sein. Beim Einpumpen kann dabei das Kühlmittel aus dem Vorratsbehälter mithilfe des Kompressors über den hochdruckseitigen Anschluss in die Klimaanlage eingepumpt werden. Bevorzugter Weise kann dabei das Kühlmittel im Überdruckbereich mit einem Gaskühler gekühlt und die eingepumpte Menge mit einer Durchflussmessung gemessen werden.

Gemäß einer bevorzugten Ausführungsform können erfindungsgemäß an den niederdruckseitigen Bereich und/oder an den hochdruckseitigen Bereich Ablassventile angeschlossen sein. Dies erlaubt es, das Kältemittel, z.B. CO2, in die Umgebung abzulassen.

In einer vorteilhaften Ausführungsform kann ein Frischölbehälter über ein Frischölventil an das Fluidsystem angeschlossen sein. Dies Erlaubt auf einfache Weise das Nachfüllen frischen Öls in die Klimaanlage. Als "Fluidsystem" wird im Zusammenhang mit der gegenständlichen Beschreibung die Gesamtheit aller Leitungen und Bauteile der Vorrichtung und gegebenenfalls der daran angeschlossenen Klimaanlage bezeichnet, in denen sich das Fluid des Kältemittels befinden kann, bzw. die von dem Kältemittel durchströmt werden können.

Bevorzugter Weise kann im niederdruckseitigen Bereich ein Ölabscheider und/oder ein Verdampfer und/oder ein Filtertrockner vorgesehen sein, und im Überdruckbereich kann ein Flüssigkeitsabscheider und/oder ein Gaskühler und/oder eine Durchflussmessung vorgesehen sein. Diese Merkmale erlauben eine vorteilhafte Konditionierung des Kühlmittels. Insbesondere können Altöl und Verschmutzungen aus dem Kühlmittel entfernt werden. Die Durchflussmessung erlaubt eine präzise Bemessung der nachgefüllten Kühlmittelmenge.

Eine vorteilhafte Ausführungsform der erfindungsgemäßen Vorrichtung kann vorsehen, dass im Überdruckbereich zwischen dem Kompressor und dem Gaskühler ein Umschaltventil vorgesehen ist, mit dem die Umlauf-Fluidverbindung auf einen den Gaskühler umgehenden Bypass umleitbar ist. Ein einzelner Kompressor kann dadurch sowohl für den Umwälzschritt (über den Bypass), als auch zum Abpumpen und zum Einpumpen des Kühlmittels (jeweils über den Gaskühler) genutzt werden.

Das erfindungsgemäße Verfahren zum Betreiben eines Servicegeräts für Klimaanlagen, insbesondere für Klimaanlagen, die als Kältemittel CO₂ bzw. R744 nutzen, ist dadurch gekennzeichnet, dass das Servicegerät zur Bildung eines Kreislaufes über eine niederdruckseitige Kupplung und eine hochdruckseitige Kupplung an die Niederdruckseite bzw. die Hochdruckseite der Klimaanlage angeschlossen wird, wobei das Verfahren den Schritt aufweist, das Kältemittel in der Klimaanlage von einem Phasenzustand II innerhalb der Nassdampfkurve mittels eines Kreislaufprozesses in einen Phasenzustand II^{E} außerhalb der Nassdampfkurve zu überführen, wobei in Phasenzustand II^{E} die spezifische Enthalpie einen Wert aufweist, dessen Isenthalpe vollständig außerhalb des Trockeneisbereichs liegt. Vom Phasenzustand II^{E} ausgehend kann das Kältemittel abgeführt werden, ohne dass sich Trockeneis bildet.

Als "Kreislaufprozess" wird im Zusammenhang mit der gegenständlichen Erfindung ein Arbeitsschritt bezeichnet, bei dem das Kühlmittel in einem Kreislauf zirkulieren gelassen wird. Hinsichtlich der Phasenänderungen handelt es sich dabei um keinen geschlossenen Kreisprozess, da der angestrebte Endpunkt der Zustandsänderung (Phasenzustand II^{E}) nicht mit dem Ausgangszustand (Phasenzustand II) übereinstimmt. Der Kreislaufprozess könnte beispielsweise von einer einfachen Umwälzanlage mit einer Gaspumpe und einer Wärmezufuhr, z.B. einem Wärmetauscher, ausgeführt werden, da dies ausreichen würde, um die Enthalpie des Kältemittels zu erhöhen. Besonders vorteilhaft ist jedoch die Verwendung der hierin beschriebenen erfindungsgemäßen Vorrichtung zum Warten einer Klimaanlage.

In vorteilhafter Weise kann der Kreislaufprozess von Phasenzustand II ausgehend die folgenden Zustandsänderungen umfassen: Im Wesentlichen isobare Erwärmung des Kältemittels bis aus der Nassdampfkurve, im Wesentlichen isentrope Verdichtung auf einen Überdruck oberhalb des Drucks des anfänglichen Phasenzustands II und vorzugsweise über dem kritischen Druck des Kältemittels, im Wesentlichen isenthalpe Expansion, und Vermischen mit dem Kältemittel in der Klimaanlage. Dies stellt einen einfachen Kreislaufprozess dar, der sich im Wesentlichen mit einem Verdampfer, einem Kompressor und einem Drosselorgan realisieren lässt.

Vor dem Schritt des Kreislaufprozesses kann das erfindungsgemäße Verfahren die folgenden Schritte aufweisen: Evakuieren eines abgeschlossenen Bereichs der Servicevorrichtung, der an die Niederdruckseite der Klimaanlage anschließt und von dieser durch ein geschlossenes Ventil getrennt ist und Öffnen einer Fluidverbindung zwischen dem evakuierten Bereich der Servicevorrichtung und dem Fluidsystem der Klimaanlage. Dadurch kann der Kreislaufprozess von einem günstigen Phasenzustand II ausgehend begonnen werden, der sich nach einer ersten Expansion des Kühlmittels ergibt.

In vorteilhafter Weise kann das Verfahren nach dem Kreislaufprozess den Schritt aufweisen, das Kältemittel aus der Klimaanlage in einen Vorratsbehälter abzupumpen. Gemäß den jeweiligen Umständen und den gesetzlichen Gegebenheiten kann das Kältemittel entweder ganz abgelassen oder zur Wiederverwertung gespeichert werden.

In einer bevorzugten Ausführungsform kann während des Verfahrens Altöl abgeschieden und die Menge des aus der Klimaanlage abgeschiedenen Altöls ermittelt werden. Dadurch lässt sich auf die Menge des in die Klimaanlage nachzufüllenden Frischöls schließen.

Eine weitere vorteilhafte Ausführungsform des Verfahrens kann den Schritt aufweisen, nach dem Ablassen und gegebenenfalls Abpumpen des Kältemittels das System mit einer Vakuumpumpe zu evakuieren. Das Evakuieren der Anlage ermöglicht eine Dichteprüfung. Gleichzeitig wird in der Anlage gegebenenfalls vorhandenes Wasser verdampft und aus dem Kreislauf entfernt.

Nach dem Entfernens der Kältemittels und vor dem Wiederbefüllen der Klimaanlage kann in vorteilhafter Weise Frischöl in das evakuierte Fluidsystem eingebracht werden, wobei die Menge des Frischöls anhand der Menge des abgeschiedenen Altöls ermittelt werden kann. Dadurch ist eine einfache und genaue Dosierung der Frischölmenge über ein einfaches Ventil möglich. Es ist keine Pumpe erforderlich, da das Frischöl vom Vakuum angesaugt wird. Das Öl wird beim anschließenden Befüllen vom Kältemittel mitgenommen und gelangt so in die Klimaanlage.

Die Erfindung wird im Folgenden anhand einer beispielhaften Ausführungsform unter Bezugnahme auf die beigefügten Zeichnungen, die beispielhaft, schematisch und nicht einschränkend vorteilhafte Ausgestaltungen der Erfindung zeigen, detailliert beschrieben, wobei
Fig. 1 einen Schaltplan einer Servicevorrichtung zeigt,
Fig. 2A-2C in einer schematischen Darstellung einige Fluidverbindungen zeigen, die durch Schalten von Ventilen herstellbar sind, und
Fig. 3 die Phasenänderungen des Umwälzschritts in einem p,h-Diagramm von R744 zeigt.

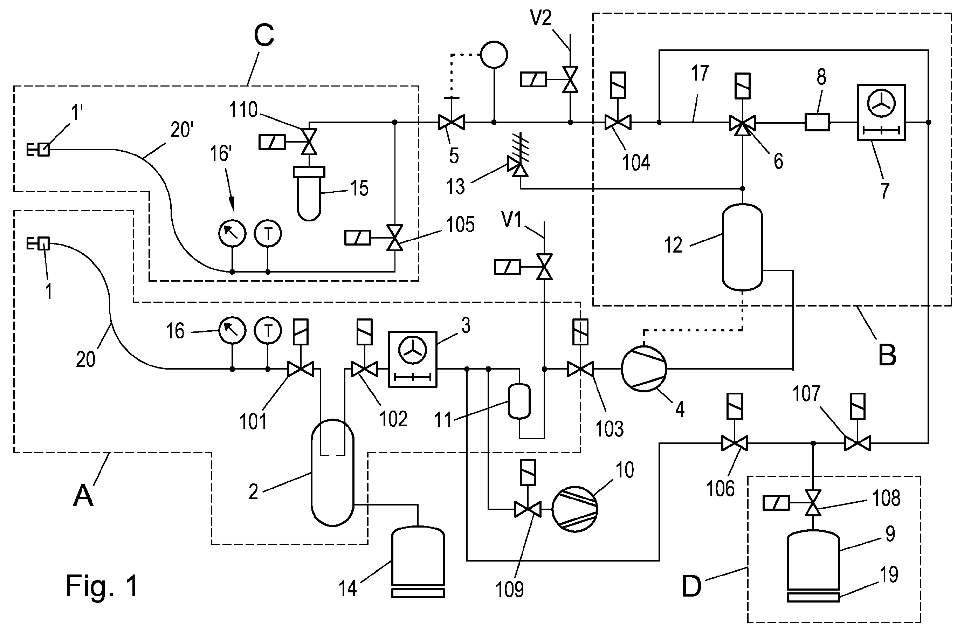

Fig. 1 zeigt eine Ausführungsform der Servicevorrichtung in einem Schaltplan, wobei sich das Fluidsystem der Vorrichtung im Wesentlichen in vier Bereiche, einen niederdruckseitigen Bereich A, einen Überdruckbereich B, einen hochdruckseitigen Bereich C und einen Vorratsbereich D einteilen lässt.

Der niederdruckseitige Bereich A beginnt bei der niederdruckseitigen Kupplung 1, mit der die Servicevorrichtung an die Niederdruckseite der KFZ-Klimaanlage angeschlossen wird. Von der niederdruckseitigen Kupplung 1 verläuft die Leitung vorzugsweise in einem Schlauch bis zu einem ersten Absperrventil 101, wobei vor dem Absperrventil 101 Messgeräte 16 für den Druck und die Temperatur vorgesehen sind. Beim Verbinden der niederdruckseitigen Kupplung mit der Klimaanlage ist das Absperrventil 101 geschlossen, und die Messgeräte 16 messen im Wesentlichen die Werte für das Klimamittel auf der Niederdruckseite der Klimaanlage. Nach dem Absperrventil 101 ist ein Ölabscheider 2 angeordnet und nach einem weiteren Absperrventil 102 führt die Leitung über einen Verdampfer 3 und einen Filtertrockner 11 zu einem weiteren Ventil 103, welches als das Ende des niederdruckseitigen Bereichs A angesehen werden kann.

Das vom Ölabscheider 2 abgeschiedene Öl aus der Klimaanlage wird in einem Altölsammelbehälter 14 gesammelt und mit einer Waage gewogen, um die Menge an nachzufüllendem Öl zu ermitteln.

Zwischen dem Verdampfer 3 und dem Filtertrockner 11 befinden sich zwei Anschlüsse, wobei der erste Anschluss zu einem Absperrventil 106 führt, das als Abgrenzung zum Vorratsbereich D vorgesehen ist. Der zweite Anschluss führt über ein Absperrventil 109 zu einer Vakuumpumpe 10.

Zwischen dem Filtertrockner 11 und dem Ventil 103 ist ein weiterer Anschluss vorgesehen, der zu einem ersten Ablassventil V1 führt, über welches das Kältemittel an die Umgebung abgelassen werden kann.

Nach dem Ventil 103 am Ende des niederdruckseitigen Bereichs A ist ein Kompressor 4 vorgesehen, der in den Überdruckbereich B mündet. Im Überdruckbereich B ist nach dem Kompressor 4 ein Flüssigkeitsabscheider 12 vorgesehen, der dazu dient, Öl und Betriebsmittel des Kompressors, die vom Kühlmittel mitgeführt werden, zurückzugewinnen und dem Kompressor wieder zuzuführen. Das Sicherheitsventil 13 begrenzt den Anlagendruck, um etwaige Zerstörungen durch mögliche Defekte und damit überhöhtem Druck entgegenzuwirken. Nach dem Flüssigkeitsabscheider 12 kann der Fluidstrom durch ein Umschaltventil 6 entweder über eine Durchflussmessung 8 und einen Gaskühler 7 geführt werden, oder über einen Bypass 17, der die Durchflussmessung und den Gaskühler umgeht. Am Ende des Überdruckbereichs B befindet sich noch ein Absperrventil 104, und nach diesem führt die Leitung zu einem Drosselorgan 5, welches zwischen dem Überdruckbereich B und dem nachfolgenden hochdruckseitigen Bereich C angeordnet ist. Zwischen dem Absperrventil 104 und dem Drosselorgan 5 ist ein Anschluss vorgesehen, der zu einem zweiten Ablassventil V2 führt. Als Drosselorgan 5 wird in der dargestellten Ausführungsform ein geregeltes Expansionsventil verwendet. Das Drosselorgan kann jedoch auch auf eine andere Weise realisiert werden, zum Beispiel durch ein Orifice mit oder ohne Bypass, oder eine Festdrossel in Verbindung mit einem drehzahlgeregelten Kompressor.

Der nach dem Drosselorgan 5 beginnende hochdruckseitige Bereich C weist ein Absperrventil 105 und Messgeräte 16' auf, über die Druck und Temperatur beim Zufuhrschlauch zur Hochdruckseite der Klimaanlage gemessen werden können. Zwischen dem Drosselorgan 5 und dem Absperrventil 105 ist ein Anschluss vorgesehen, der über ein Frischölventil 110 zu einem Frischölbehälter 15 führt. Der hochdruckseitige Bereich C endet bei der hochdruckseitigen Kupplung 1', mit der die Servicevorrichtung an die Hochdruckseite der Klimaanlage angeschlossen wird.

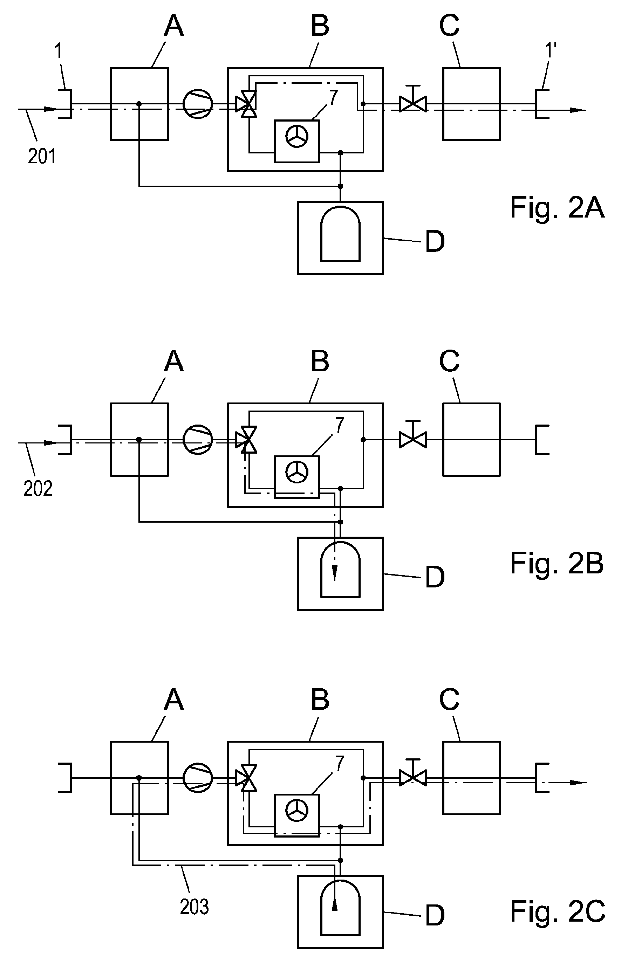

Wie dies in Fig. 1 zu erkennen ist, lässt sich durch Öffnen der Anschlussventile 101 und 105, sowie der inneren Ventile 102, 103 und 104, zwischen der niederdruckseitigen Kupplung 1 und der hochdruckseitigen Kupplung 1' eine durchgängige Fluidverbindung schaffen, die von der niederdruckseitigen Kupplung 1 über den Ölabscheider 2, den Verdampfer 3, den Filtertrockner 11, den Kompressor 4, den Flüssigkeitsabscheider 12, das zum Bypass 17 geschaltete Umschaltventil 6, den Bypass 17 und das Drosselorgan 5 bis zur hochdruckseitigen Kupplung 1' führt. Dieser Weg wird im Folgenden als Umlauf-Fluidverbindung 201 bezeichnet, und sie ist in Fig. 2A nochmals schematisch und übersichtlich stark vereinfacht dargestellt. Zusammen mit den Leitungen der Klimaanlage schafft die Umlauf-Fluidverbindung 201 ein durchgängiges Kreislaufsystem. Es ist anzumerken, dass die Umlauf-Fluidverbindung 201 den im Überdruckbereich angeordneten Gaskühler 7 umgeht, indem das Umschaltventil 6 zum Bypass 17 hin geschalten ist. Die funktionelle Bedeutung der Umlauf-Fluidverbindung 201 wird im Zusammenhang mit der Beschreibung des erfindungsgemäßen Verfahrens detaillierter erläutert werden.

Der vierte Bereich der Vorrichtung ist der Vorratsbereich D, wobei dieser im Wesentlichen aus einem Vorratsbehälter 9 und einer daran angebrachten Wägeeinheit 19 besteht. Die in den Vorratsbehälter 9 einmündende Leitung kann mit einem Absperrventil 108 abgesperrt werden. Vom Vorratsbereich D führt eine erste Leitung über das Absperrventil 106 zum niederdruckseitigen Bereich A und eine zweite Leitung führt über ein Absperrventil 107 zum Überdruckbereich B, wobei diese Leitung am Ausgang des Gaskühlers 7 mündet.

Wie dies einem Fachmann klar ist, lassen sich mithilfe der Ventile 101-110, V1 und V2, sowie des Umschaltventils 6 eine Vielzahl an unterschiedlichen Fluidverbindungen durch die Elemente und Leitungen der in Fig. 1 dargestellten Vorrichtung realisieren. Durch Öffnen der Ventile 101, 102, 103, 107 und 108 und Schalten des Umschaltventils 6 zur Durchflussmessung 8 und dem Gaskühler 7 hin, lässt sich beispielsweise eine Abpump-Fluidverbindung 202 herstellen, über die das Kältemittel aus der Klimaanlage vom Kompressor 4 über den Gaskühler 7 in den Vorratsbehälter 9 gepumpt werden kann. Die Abpump-Fluidverbindung 202 ist schematisch in Fig. 2B dargestellt.

Durch Öffnen der Ventile 108, 106, 103, 104 und 105 und Schalten des Umschaltventils 6 zur Durchflussmessung 8 und dem Gaskühler 7 hin, lässt sich eine Einpump-Fluidverbindung 203 herstellen, über die mit dem Kompressor 4 Kältemittel aus dem Vorratsbehälter 9 über die Durchflussmessung 8, den Gaskühler 7 und das Drosselorgan 5 in die Hochdruckseite der Klimaanlage eingepumpt werden kann. Die Einpump-Fluidverbindung 203 ist schematisch in Fig. 2C dargestellt.

Im Folgenden wird in beispielhafter Weise ein Verfahren erläutert, mit dem die in Fig. 1 dargestellte Wartungsvorrichtung vorteilhaft zur Durchführung eines Kältemittelwechsels bei einer KFZ-Klimaanlage verwendet werden kann.

Zuerst werden die niederdruckseitige Kupplung 1 und die hochdruckseitige Kupplung 1' an entsprechende Serviceanschlüsse der KFZ-Klimaanlage angeschlossen, wobei die Anschlussventile 101 und 105 geschlossen sind. Die niederdruckseitige Kupplung 1 und die hochdruckseitige Kupplung 1' befinden sich jeweils am Ende eines Anschlussschlauchs 20, 20', mit dem die Serviceanschlüsse im Auto leicht erreicht werden können. Bevorzugter Weise kann auch ein Kombianschluss verwendet werden, mit dem in einem einzigen Arbeitsschritt beide Anschüsse gleichzeitig an die Klimaanlage angeschlossen werden können. Sobald der Anschluss hergestellt ist, strömt das in der Klimaanlage befindliche Gemisch aus Kältemittel und Kompressoröl in die Anschlussschläuche 20, 20' und es stellt sich ein Gleichgewichtszustand ein, wobei der Druck und die Temperatur des Kältemittels auf den Messgeräten 16, 16' angezeigt wird. Bei einer typischen beispielhaften KFZ-Klimaanlage mit R744 als Kühlmittel weist das CO2 in der Klimaanlage, nachdem sich bei Raumtemperatur (etwa 20 °C) ein Gleichgewichtszustand eingestellt hat, einen Druck im Bereich von etwa 60 bar auf. Der Füllgrad der Anlage liegt bei einer vollen KFZ-Klimaanlage üblicher Weise in einem Bereich von maximal 260 kg/m³ oder gegebenenfalls darunter.

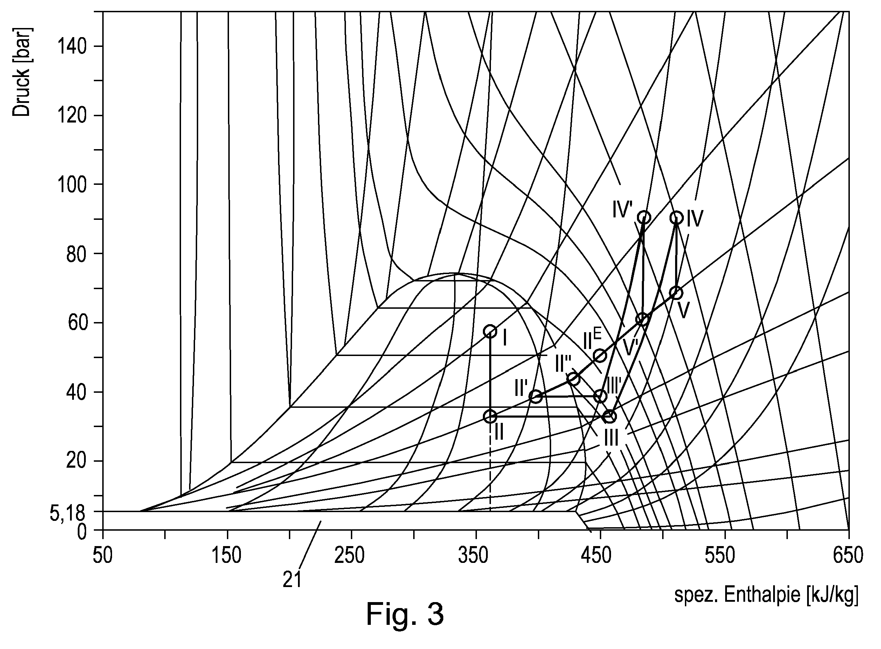

Es ist zu beachten, dass die Betriebsdrücke der Klimaanlage (die üblicher Weise bei beispielsweise ca. 130 bar auf der Hochdruckseite und ca. 40 bar auf der Niederdruckseite liegen) beim Warten der Anlage keine Rolle spielen, da ja der Klimaanlagen-Kompressor (wie auch der Gaskühler und der Verdampfer der Klimaanlage) während des Service deaktiviert ist. Wenn im Zusammenhang mit dieser Anmeldung daher der Begriff "Hochdruckseite der Klimaanlage" verwendet wird, so ist damit lediglich der Leitungsabschnitt der Klimaanlage gemeint, der zwischen dem Verdichter und der Drossel der Klimaanlage liegt, und der über den Gaskühler und, im Fall von CO2 als Kühlmittel, den inneren Wärmetauscher der Kühlanlage verläuft. Wie einem Fachmann klar ist, stellt sich bei stillstehendem Kompressor rasch im Wesentlichen derselbe Druck und Phasenzustand im gesamten Kreislauf der Klimaanlage ein. Dieser Phasenzustand in Ruhelage liegt im gegenständlichen Beispiel bei etwa 20 °C, 250 kg/m³ und 57 Bar und ist im Phasendiagramm der Fig. 3 als Punkt I bezeichnet.

Nach dem Anschließen des Servicegeräts werden das innere Ventil 102 und das Vakuumpumpen-Ventil 109 geöffnet und das Volumen des Ölabscheiders 2 wird mit der Vakuumpumpe evakuiert. Danach wird, nach Schließen des Vakuumpumpen-Ventils 109, das Anschlussventil 101 geöffnet, was dazu führt, dass das Kältemittel der Klimaanlage in den Öl-abscheider strömt. Die dabei stattfindende Zustandsänderung ist im Diagramm der Fig. 3 als isenthalpe Expansion zwischen den Punkten I und II zu erkennen. Im dargestellten Beispiel liegt Punkt II etwa bei -2 °C und 33 bar, wobei es in etwa zu einer Verdoppelung des Volumens kommt.

Würde man nun von Punkt II ausgehend damit beginnen, das Kältemittel über die Ablassventile V1 und V2 abzulassen (oder es in den Vorratsbehälter abzupumpen) und dadurch rasch zu entspannen, würde bei einem Druck von 5,18 bar (bei einer Temperatur von etwa -59 °C) das Kältemittel zu Trockeneis erstarren. Bisher war es daher üblich, nach einer ersten Entspannung bis auf etwa 18 bar, so lange zu warten, bis das CO₂ im Kühlkreislauf vollständig verdampft ist. Danach kann der Ablass- bzw. Absaugvorgang, nun außerhalb des Nassdampfbereichs, fortgesetzt werden.

Mit der erfindungsgemäßen Vorrichtung ist es nunmehr möglich, diese Wartezeit zu vermeiden und dadurch die für das Service erforderliche Gesamtdauer erheblich zu verringern. Dazu wird im nächsten Schritt durch entsprechendes Schalten der Ventile die Umlauf-Fluidverbindung 201 (gemäß Fig. 2A) hergestellt. Danach wird über den Kompressor 4 das Kältemittel in der Umlauf-Fluidverbindung 201 zirkulieren gelassen, wobei es von der niederdruckseitigen Kupplung 1 bis zur hochdruckseitigen Kupplung 1' der Reihe nach die folgenden Phasen (siehe Fig. 3) bzw. Elemente (siehe Fig. 1) durchläuft:

Im Ölabscheider 2 wird das vom Kältemittel mitgeführte Altöl abgeschieden und in einem Altölbehälter 14 gesammelt. Die Menge des gesammelten Altöls kann beispielsweise über eine Waage ermittelt werden.

Im Verdampfer wird das CO2 isobar aus der Nassdampfkurve heraus erwärmt (Zustandsänderung von Punkt II zu Punkt III in Fig. 3) und durchläuft danach einen Filtertrockner, um eventuelle Verunreinigungen oder Feuchtigkeit zu entfernen. Das Kältemittel weist im gegenständlichen Beispiel bei Punkt III einen Druck von etwa 33 Bar und eine Temperatur von etwa 15 °C auf.

Vom Kompressor 4 wird das Kältemittel im Wesentlichen isentrop auf einen überkritischen Druck von etwa 90 bar verdichtet, wobei der Druck von dem Drosselorgan 5 geregelt wird (Zustandsänderung von Punkt III zu Punkt IV in Fig. 3). Die Temperatur bei Punkt IV beträgt etwa 100 °C. Der Flüssigkeitsabscheider 12 dient dazu, mitgerissenes Öl des Kompressors 4 diesem wieder rückzuführen.

Über das Umschaltventil 6 und den Bypass 17 gelangt das Kältemittel, unter Umgehung des Gaskühlers 7, direkt zum Drosselorgan 5, wo es zu einer isenthalpen Expansion (von Punkt IV zu Punkt V in Fig. 3) auf einen Druck von etwa 67 bar und eine Temperatur von etwa 80 °C kommt.

In der Klimaanlage kommt es dann zu einer Vermischung mit dem Kältemittel, das sich im Akkumulator der Klimaanlage befindet, und das anfänglich den Ausgangs-Phasenzustand (Punkt II in Fig. 3) aufweist. Durch das Mischen ändert sich der Phasenzustand in der Klimaanlage bei gleichbleibender Dichte, wobei er sich zum Mischpunkt II` hin verschiebt, der im Diagramm beispielsweise bei etwa 4°C und etwa 38 bar eingezeichnet ist. Der Mischpunkt II' stellt nur einen virtuellen Punkt dar, da sich beim tatsächlichen Kreislaufprozess dieser Punkt stetig entlang der Isodensen (etwa bei 125 kg/m³) verschiebt.

Vom Mischpunkt II' ausgehend ist der weitere Verlauf des Kreislaufprozesses über die Punkte III' (15 °C, 38 bar), IV' (85°C, 90 bar), V' (61 °C, 61 bar) bis zum nächsten Mischpunkt II" (ca. 10 °C, 43 bar) angedeutet.

Der Kreislaufprozess wird so lange durchgeführt, bis in der Klimaanlage ein Phasenzustand gemäß Punkt II^{E} erreicht ist, wobei dieser Punkt bei einer Enthalpie liegt, deren Isenthalpe vollständig außerhalb des Trockeneisbereichs 21 liegt. Die genaue Lage des Endpunkts 11^{E} hängt stark vom ursprünglichen Füllgrad der Anlage ab und liegt vorzugsweise bei einer spezifischen Enthalpie von etwa 450 kJ/kg oder darüber. Ausgehend von Punkt II^{E} kann das CO₂ abgelassen und abgepumpt werden, ohne dass das Kühlmittel vereisen würde.

Über die Messgeräte 16, 16' kann während des Kreislaufprozesses ein Wertepaar für den Druck und die Temperatur im Kreislauf abgelesen werden, aus dem ermittelt werden kann, ob beim vorgegebenen Füllgrad bereits eine ausreichende Enthalpie für das Ablassen erreicht ist. Dabei ist es nicht zwingend erforderlich, den tatsächlichen Füllgrad (also die Dichte) der Anlage genau zu kennen. Wenn man den maximalen Füllgrad als Referenzwert für das Verfahren heranzieht, würde derselbe Kreislaufprozess, wenn der Füllgrad tatsächlich geringer wäre, lediglich zu einem Endpunkt II^{E} mit einer höheren Enthalpie führen, sodass weiterhin kein Vereisen im nachfolgenden Ablassschritt zu befürchten ist.

Bei dem dargestellten Kreislaufprozess wird angenommen, dass sich weder die Masse des zirkulierenden Kältemittels, noch das Volumen des Fluidsystems ändert, und somit die Dichte des Kühlmittels (wenn man das Gesamtsystem in einem Gleichgewichtszustand betrachtet) während des Kreislaufprozesses gleich bleibt. Aus diesem Grund befinden sich die Phasenzustände II, II', II", bis II^{E} in Fig. 3 auf derselben Isodensen. Es wäre jedoch auch möglich, während des Kreislaufprozesses einen Teil des Kältemittels abzuführen, zum Beispiel durch dosiertes Öffnen des Ablassventils V2, um zu einem Punkt II^{E} zu gelangen, bei dem das Kältemittel eine andere Dichte aufweist als bei Punkt II. Es könnte zum Beispiel erreicht werden, dass alle Punkte II, II', II", bis II^{E} auf einer Isobaren liegen. Das erfindungsgemäße Verfahren könnte dadurch auch mit schwächeren Kompressoren realisiert werden, die nur eine geringere Leistung haben, und zum Beispiel nur für Nenndrücke von nur 80, 70, 60 Bar oder weniger geeignet sind.

Das Ablassen kann durch Öffnen der Ablassventile V1, V2 erfolgen, es ist jedoch mit der erfindungsgemäßen Vorrichtung auch möglich, das Kältemittel zu sammeln und einer Wiederverwendung zugänglich zu machen. Zu diesem Zweck wird das innere Ventil 104 zwischen dem Überdruckbereich B und dem hochdruckseitigen Bereich C geschlossen und das Umschaltventil 106 zur Seite des Gaskühlers 7 hin geschalten. Durch Öffnen des überdruckseitigen Absperrventils 106 und des Vorratsbehälter-Ventils 108 kann eine Abpump-Fluidverbindung 202 geschaffen werden, die ausgehend von der niederdruckseitigen Kupplung 1 über den Ölabscheider 2, den Verdampfer 3, den Filtertrockner 11, den Kompressor 4, den Flüssigkeitsabscheider 12, das Umschaltventil 6, die Durchflussmessung 8 und den Gaskühler 7 zum Vorratsbehälter 9 führt. Der Kompressor 4 kann nun das Kältemittel über die niederdruckseitige Kupplung 1 aus dem Kreislauf der Klimaanlage in den Vorratsbehälter pumpen.

Nach dem Abpumpen des Kältemittels wird das Vorratsbehälterventil 108 geschlossen und verbliebenes CO2 über die Ablassventile V1 und V2 abgelassen, bis der Druck in der Anlage auf Umgebungsdruck abgesunken ist. Danach werden die Anschlussventile 101, 105, die inneren Ventile 102, 103, 104 und das Vakuumpumpen-Ventil 109 geöffnet und das System wird über die Vakuumpumpe 10 evakuiert, wobei mit der Vakuumpumpe ein Druck in der Größenordnung von etwa 1 mbar erzielbar ist. Bei diesem Druck verdampft auch eventuell in der Anlage vorhandenes Wasser und wird über die Vakuumpumpe 10 zusammen mit dem verbliebenen Kältemittel abgesaugt.

Nachdem nun das System vollständig evakuiert ist, wird die im Altölsammelbehälter 14 gesammelte Menge an Kompressoröl gemessen und eine entsprechende Menge an Frischöl durch dosiertes Öffnen des Frischölventils 110 aus dem Frischölbehälter 15 in den hochdruckseitigen Bereich C eingebracht. Das im System vorherrschende Vakuum bewirkt, dass das Öl ohne weiteres Zutun ins System eingesaugt wird. Im nachfolgenden Einpumpschritt wird das Öl dann vom einströmenden Kältemittel in den Kreislauf der Klimaanlage gespült.

Zum anschließenden Wiederbefüllen der Klimaanlage werden dann die inneren Ventil 103, 104 und 105 geöffnet und das Umschaltventil wird in die zum Gaskühler 7 führende Richtung geschalten. Weiters werden das niederdruckseitige Absperrventil 106 und das Vorratsbehälter-Ventil 108 geöffnet, sodass die Einpump-Fluidverbindung 203 hergestellt ist, die von dem Vorratsbehälter 9 über den Filtertrockner 11, den Kompressor 4, den Flüssigkeitsabscheider 12, das Umschaltventil 6, das Rückschlagventil 18, das Drosselorgan 5 und die hochdruckseitige Kupplung 1' in die Hochdruckseite der Klimaanlage führt. Dann pumpt der Kompressor 4 CO₂ aus dem Vorratsbehälter über die Einpump-Fluidverbindung 203 in die Klimaanlage, wobei die Menge des eingepumpten Kältemittels in der Durchflussmessung 8 gemessen wird, um die nach Herstellerangaben erforderliche Menge an Kältemittel in die Klimaanlage einzufüllen. Der Hochdruck des Kompressors wird dabei vom Drosselorgan 5 geregelt. Beim Einpumpen bleiben das Anschlussventil 101 und das erste innere Ventil 102 geschlossen, damit sich der Ölabscheider nicht mit Kältemittel füllt.

Nach dem Einfüllen wird das Anschlussventil 105 geschlossen und die Kupplungen 1 und 1' werden von den Serviceanschlüssen der Klimaanlage gelöst.

In Abwandlung zu dem in den Figuren dargestellten besonderen Ausführungsbeispiel, das rein der Erläuterung der Erfindung dient, kann die erfindungsgemäße Vorrichtung auch auf zahlreiche andere Weisen ausgeführt sein. Insbesondere kann die Anordnung von Elementen verändert werden und bestimmte Elemente können auch gänzlich entfernt werden, sofern dies die Funktionalität der Vorrichtung und die Durchführung des erfindungsgemäßen Verfahrens nicht beeinträchtigt.

Beispielsweise könnte die Anordnung des Ölabscheiders 2 und des Verdampfers 3 vertauscht werden, ohne die Funktionalität zu beeinträchtigen. Die Durchflussmessung 8 ist nicht zwingend erforderlich, da die Füllmenge auch auf andere Weise bestimmt werden kann, wie dies im Fachbereich bekannt ist, beispielsweise mittels Massenmessung der Kältemittelflasche bei gleichzeitiger Kompensation der Kältemittelmenge im Servicegerät. Auch kann die Durchflussmessung an einer anderen Stelle im System angeordnet sein.

Das Befüllen der KFZ-Klimaanlage und gegebenenfalls auch das Recycling in einer Flasche würde auch mit einem vereinfachten System funktionieren, bei dem kein Gaskühler 7 vorhanden ist. Falls das CO₂ keiner Wiederverwertung zugeführt werden soll, wäre auch kein Umschaltventil 6 erforderlich und auch die Ventile 107 und 108 können entfallen, wobei die Durchflussmessung gegebenenfalls in dem Kreislauf vor dem Ventil 104 angeordnet werden könnte.

Erfindungsgemäß können von Fachleuten ohne erfinderisches Zutun zahlreiche geänderte Ausführungsformen geschaffen werden, ohne vom Schutzbereich der beigefügten Ansprüche abzuweichen.

### Bezugszeichen:

Niederdruckseitige Kupplung 1
Hochdruckseitige Kupplung 1'
Ölabscheider 2
Verdampfer 3
Kompressor 4
Drosselorgan 5
Umschaltventil 6
Gaskühler 7
Durchflussmessung 8
Vorratsbehälter 9
Vakuumpumpe 10
Filtertrockner 11
Flüssigkeitsabscheider 12
Sicherheitsventil 13
Altölsammelbehälter 14
Frischölbehälter 15
Messgeräte 16, 16'
Bypass 17
Rückschlagventil 18
Wägeeinheit 19
Anschlussschlauch 20, 20'
Trockeneisbereich 21
Anschlussventile 101, 105
Innere Ventile 102, 103, 104
hochdruckseitiges und überdruckseitiges Absperrventil 106, 107
Vorratsbehälter-Ventil 108
Vakuumpumpen-Ventil 109
Frischölventil 110
Ablassventile V1, V2
Umlauf-Fluidverbindung 201
Abpump-Fluidverbindung 202
Einpump-Fluidverbindung 203

## Patentansprüche

1. Vorrichtung zum Warten einer Klimaanlage, insbesondere für Klimaanlagen, die als Kältemittel CO₂ bzw. R744 nutzen, wobei die Vorrichtung einen niederdruckseitigen Bereich (A), der über eine niederdruckseitige Kupplung (1) an einen Serviceanschluss an der Niederdruckseite der Klimaanlage anschließbar ist, und einen hochdruckseitigen Bereich (C), der über eine hochdruckseitige Kupplung (1') an einen Serviceanschluss an der Hochdruckseite der Klimaanlage anschließbar ist, aufweist, wobei zwischen dem niederdruckseitigen Bereich (A) und dem hochdruckseitigen Bereich (C), ein Kompressor 4 vorgesehen ist, **dadurch gekennzeichnet, dass** zwischen dem Kompressor (4) und dem hochdruckseitigen Bereich (C) ein Überdruckbereich (B) vorgesehen ist, der über ein Drosselorgan (5) mit dem hochdruckseitigen Bereich (C) verbunden ist.

2. Vorrichtung nach Anspruch 1, **dadurch gekennzeichnet, dass** an den niederdruckseitigen Bereich (A) eine Vakuumpumpe (10) angeschlossen ist.

3. Vorrichtung nach einem der Ansprüche 1 oder 2, **dadurch gekennzeichnet, dass** von der niederdruckseitige Kupplung (1) ausgehend mittels Ventilen (101, 102, 103, 104, 105) eine Umlauf-Fluidverbindung (201) über
- den niederdruckseitigen Bereich (A),
- den Kompressor (4),
- den Überdruckbereich (B),
- das Drosselorgan (5), und
- den hochdruckseitigen Bereich (C)
zu der hochdruckseitigen Kupplung (1') freigebbar ist.

4. Vorrichtung nach einem der Ansprüche 1 bis 3, **dadurch gekennzeichnet, dass** in einem Vorratsbereich (D) ein Vorratsbehälter (9) vorgesehen ist, der über Ventile (106, 107, 108) an den Überdruckbereich (B) und/oder den niederdruckseitigen Bereich (A) anschließbar ist.

5. Vorrichtung nach Anspruch 4, **dadurch gekennzeichnet, dass** von der niederdruckseitigen Kupplung (1) ausgehend mittels Ventilen (101, 102, 103, 107, 108) eine Abpump-Fluidverbindung (202) über
- den niederdruckseitigen Bereich (A),
- den Kompressor (4) und
- den Überdruckbereich (B)
zu dem Vorratsbehälter (9) freigebbar ist.

6. Vorrichtung nach einem der Ansprüche 4 oder 5, **dadurch gekennzeichnet, dass** von dem Vorratsbehälter (9) ausgehend mittels Ventilen (108, 106, 103, 104, 105) eine Einpump-Fluidverbindung (203) über
- den Kompressor (4),
- den Überdruckbereich (B) und
- den hochdruckseitigen Bereich (C)
zu der hochdruckseitigen Kupplung (1') freigebbar ist.

7. Vorrichtung nach einem der Ansprüche 1 bis 6 **dadurch gekennzeichnet, dass** an den niederdruckseitigen Bereich (A) und/oder an den hochdruckseitigen Bereich (C) Ablassventile (V1, V2) angeschlossen sind.

8. Vorrichtung nach einem der Ansprüche 1 bis 7, **dadurch gekennzeichnet, dass** ein Frischölbehälter (15) über ein Frischölventil (110) an das Fluidsystem angeschlossen ist.

9. Vorrichtung nach einem der Ansprüche 1 bis 8, **dadurch gekennzeichnet, dass** im niederdruckseitigen Bereich (A) ein Ölabscheider (2) und/oder ein Verdampfer (3) und/oder ein Filtertrockner (11) vorgesehen sind, und dass im Überdruckbereich (B) ein Flüssigkeitsabscheider (12) und/oder ein Gaskühler (7) und/oder eine Durchflussmessung (8) vorgesehen sind.

10. Vorrichtung nach Anspruch 9, **dadurch gekennzeichnet, dass** im Überdruckbereich (B) zwischen dem Kompressor (4) und dem Gaskühler (7) ein Umschaltventil (6) vorgesehen ist, mit dem die Umlauf-Fluidverbindung auf einen den Gaskühler (7) umgehenden Bypass (17) umleitbar ist.

11. Verfahren zum Betreiben eines Servicegeräts für Klimaanlagen, insbesondere für Klimaanlagen, die als Kältemittel CO₂ bzw. R744 nutzen, **dadurch gekennzeichnet, dass** das Servicegerät zur Bildung eines Kreislaufes über eine niederdruckseitige Kupplung und eine hochdruckseitige Kupplung an die Niederdruckseite bzw. die Hochdruckseite der Klimaanlage angeschlossen wird, und dass das Verfahren den Schritt aufweist, das Kältemittel in der Klimaanlage von einem Phasenzustand II innerhalb der Nassdampfkurve mittels eines Kreislaufprozesses in einen Phasenzustand II^{E} außerhalb der Nassdampfkurve zu überführen, wobei in Phasenzustand II^{E} die spezifische Enthalpie einen Wert aufweist, dessen Isenthalpe vollständig außerhalb des Trockeneisbereichs liegt.

12. Verfahren nach Anspruch 11, wobei der Kreislaufprozess von Phasenzustand II ausgehend die folgenden Zustandsänderungen umfasst:
a. Im Wesentlichen isobare Erwärmung des Kältemittels bis aus der Nassdampfkurve (II => III),
b. im Wesentlichen isentrope Verdichtung auf einen Überdruck oberhalb des Drucks des anfänglichen Phasenzustands II und vorzugsweise über dem kritischen Druck des Kältemittels (III => IV),
c. im Wesentlichen isenthalpe Expansion (IV => V), und
d. Vermischen mit dem Kältemittel in der Klimaanlage (V => II').

13. Verfahren nach Anspruch 11 oder 12, welches vor dem Schritt des Kreislaufprozesses die folgenden Schritte aufweist:
- Evakuieren eines abgeschlossenen Bereichs der Servicevorrichtung, der an die Niederdruckseite der Klimaanlage anschließt und von dieser durch ein geschlossenes Ventil (101) getrennt ist;
- Öffnen einer Fluidverbindung zwischen dem evakuierten Bereich der Servicevorrichtung und dem Fluidsystem der Klimaanlage (Expansion I => II).

14. Verfahren nach einem der Ansprüche 11 bis 13, welches nach dem Kreislaufprozess den Schritt aufweist, das Kältemittel aus der Klimaanlage in einen Vorratsbehälter abzupumpen.

15. Verfahren nach einem der Ansprüche 11 bis 14, **dadurch gekennzeichnet, dass** während des Verfahrens Altöl abgeschieden und die Menge des aus der Klimaanlage abgeschiedenen Altöls ermittelt wird.

16. Verfahren nach einem der Ansprüche 11 bis 15, welches weiters den Schritt aufweist, nach dem Ablassen und gegebenenfalls Abpumpen des Kältemittels das System mit einer Vakuumpumpe zu evakuieren.

17. Verfahren nach Anspruch 15 und 16, **dadurch gekennzeichnet, dass** nach dem Entfernen der Kältemittels und vor dem Wiederbefüllen der Klimaanlage Frischöl in das evakuierte Fluidsystem eingebracht wird, wobei die Menge des Frischöls anhand der Menge des abgeschiedenen Altöls ermittelt wird.

## Claims

1. A device for maintaining an air conditioner, in particular, for air conditioners using CO₂ or R744 as a coolant, wherein the device has a low-pressure side region (A), which is connectable to a service port on the low-pressure side of the air conditioner via a low-pressure side coupler (1), and a high-pressure side region (C), which is connectable to a service port on the high-pressure side of the air conditioner via a high-pressure side coupler (1'), wherein a compressor (4) is provided between the low-pressure side region (A) and the high-pressure side region (C), **characterized in that**, between the compressor (4) and the high-pressure side region (C), an over-pressure region (B) is provided, which is connected to the high-pressure side region (C) via a throttle device (5).

2. The device according to Claim 1, **characterized in that** the low-pressure side region (A) is connected to a vacuum pump (10).

3. The device according to one of Claims 1 or 2, **characterized in that**, starting from the low-pressure side coupler (1), a circuit fluid connection (201) can be released by valves (101, 102, 103, 104, 105) via
- the low-pressure side region (A),
- the compressor (4),
- the over-pressure region (B),
- the throttle device (5), and
- the high-pressure side region (C)
to the high-pressure side coupler (1').

4. The device according to one of Claims 1 through 3, **characterized in that** a storage region (D) provides a storage container (9), which is connectable via valves (106, 107, 108) to the over-pressure region (B) and/or the low-pressure side region (A).

5. The device according to Claim 4, **characterized in that**, starting from the low-pressure side coupler (1), an out-pumping fluid connection (202) can be released by the valves (101, 102, 103, 107, 108) via
- the low-pressure side region (A),
- the compressor (4), and
- the over-pressure region (B)
to the storage container (9).

6. The device according to one of Claims 4 or 5, **characterized in that**, starting from the storage container (9), an in-pumping fluid connection (203) can be released by the valves (108, 106, 103, 104, 105) via
- the compressor (4),
- the over-pressure region (B), and
- the high-pressure side region (C)
to the high-pressure side coupler (1').

7. The device according to one of Claims 1 through 6, **characterized in that** the drain valves (V1, V2) are connected to the low-pressure side region (A) and/or the high-pressure side region (C).

8. The device according to one of Claims 1 through 7, **characterized in that** a new oil container (15) is connected to the fluid system via a new oil valve (110).

9. A device according to one of Claims 1 through 8, **characterized in that** an oil separator (2) and/or an evaporator (3) and/or a filter dryer (11) is/are provided in the low-pressure side region (A), and that a liquid separator (12) and/or a gas cooler (7) and/or a flow rate meter (8) is/are provided in the over-pressure region (B).

10. The device according to Claim 9, **characterized in that** a switch valve (6), which is able to reroute the circuit fluid connection to a bypass (17) circumventing the gas cooler (7), is provided in the over-pressure region (B) between the compressor (4) and the gas cooler (7).

11. A method for operating a service device for air conditioners, in particular, for air conditioners using CO₂ or R744 as a coolant, **characterized in that** the service device for establishing a circuit is, via a low-pressure side coupler and a high-pressure side coupler, connected to the low-pressure side or the high-pressure side of the air conditioner respectively, and that the method comprises the step to transfer the coolant in the air conditioner from a phase state II within the wet steam curve via a circuit process to a phase state II^{E} outside of the wet steam curve, wherein the specific enthalpy in phase state II^{E} has a value which isenthalp lays completely outside of the dry ice region.

12. The method according to Claim 11, wherein the circuit process starting from phase state II comprises the following state changes:
a. essentially isobaric heating of the coolant to outside of the wet steam curve (II => III);
b. essentially isentropic compression to an over-pressure above the pressure of the initial phase state II and, preferably, above the critical pressure of the coolant (III => IV);
c. essentially isenthalpic expansion (I => V); and
d. mixing with the coolant in the air conditioner (V => II')

13. The method according to Claim 11 or 12, featuring, before the step of the circuit process, the following steps:
- evacuating a sealed-off region of the service device that connects at the low-pressure side of the air conditioner and that is separated from said low pressure side by a closed valve (101);
- opening a fluid connection between the evacuated region of the service device and the fluid system of the air conditioner (expansion I => II).

14. The method according to one of Claims 11 through 13, which, after the circuit process, features the step of pumping the coolant out of the air conditioner into a storage container.

15. The method according to one of Claims 11 through 14, **characterized in that** old oil is separated and the amount of old oil separated from the air conditioner is determined during the process.

16. The method according to one of Claims 11 through 15, which furthermore features the step of evacuating the system after draining and, if applicable, out-pumping the coolant with a vacuum pump.

17. The method according to Claims 16 and 17, **characterized in that**, after removing the coolant and before refilling the air conditioner, new oil is brought into the evacuated fluid system, wherein the amount of new oil is determined on the basis of the amount of separated old oil.

## Revendications

1. Dispositif pour l'entretien d'une climatisation, en particulier pour des climatisations employant du CO₂ ou du R744 comme réfrigérant, le dispositif présentant une région côté basse pression (A), laquelle est susceptible d'être raccordée à un raccord de service sur le côté basse pression de la climatisation, par le biais d'un accouplement côté basse pression (1), et une région côté haute pression (C) susceptible d'être raccordée à un raccord de service sur le côté haute pression de la climatisation, par le biais d'un accouplement côté haute pression (1'), un compresseur 4 étant prévu entre la région côté basse pression (A) et la région côté haute pression (C), **caractérisé en ce qu'**il est prévu une région de surpression (B) entre le compresseur (4) et la région côté haute pression (C), laquelle est reliée à la région côté haute pression (C) par le biais d'un organe d'étranglement (5).

2. Dispositif selon la revendication 1, **caractérisé en ce qu'**une pompe à vide (10) est raccordée à la région côté basse pression (A).

3. Dispositif selon l'une des revendications 1 ou 2, **caractérisé en ce qu'**à partir de l'accouplement côté basse pression (1), au moyen de soupapes (101, 102, 103, 104, 105), une liaison fluidique de circulation (201) passant par
- la région côté basse pression (A),
- le compresseur (4)
- la région de surpression (B),
- l'organe d'étranglement (5), et
- la région côté haute pression (C)
jusqu'à l'accouplement côté haute pression (1') peut être libérée.

4. Dispositif selon l'une des revendications 1 à 3, **caractérisé en ce que** dans une région de stockage (D), il est prévu un réservoir (9) susceptible d'être raccordé à la région de surpression (B) et/ou à la région côté basse pression (A) par le biais de soupapes (106, 107, 108).

5. Dispositif selon la revendication 4, **caractérisé en ce qu'**à partir de l'accouplement côté basse pression (1), par le biais de soupapes (101, 102, 103, 107, 108), une liaison fluidique d'aspiration (202) passant par
- la région côté basse pression (A),
- le compresseur (4), et
- la région de surpression (B)
jusqu'au réservoir (9) peut être libérée.

6. Dispositif selon l'une des revendications 4 ou 5, **caractérisé en ce qu'**à partir du réservoir (9), au moyen de soupapes (108, 106, 103, 104, 105), une liaison fluidique d'injection (203) passant par
- le compresseur (4),
- la région de surpression (B), et
- la région côté haute pression (C)
jusqu'à l'accouplement côté haute pression (1') peut être libérée.

7. Dispositif selon l'une des revendications 1 à 6, **caractérisé en ce que** des soupapes d'évacuation (V1, V2) sont raccordées à la région côté basse pression (A) et/ou à la région côté haute pression (C).

8. Dispositif selon l'une des revendications 1 à 7, **caractérisé en ce qu'**un récipient d'huile neuve (15) est raccordé au système fluidique par le biais d'une soupape d'huile neuve (110).

9. Dispositif selon l'une des revendications 1 à 8, **caractérisé en ce que** dans la région côté basse pression (A), il est prévu un séparateur d'huile (2) et/ou un évaporateur (3) et/ou un filtre déshydrateur (11), et **en ce que** dans la région de surpression (B), il est prévu un séparateur de liquide (12) et/ou un refroidisseur de gaz (7) et/ou un débitmètre (8).

10. Dispositif selon la revendication 9, **caractérisé en ce que** dans la région de surpression (B), entre le compresseur (4) et le refroidisseur de gaz (7), il est prévu une soupape d'inversion (6) permettant de dévier la liaison fluidique de circulation vers une dérivation (17) contournant le refroidisseur de gaz (7).

11. Procédé pour le fonctionnement d'un dispositif d'entretien pour climatisations, en particulier pour des climatisations employant du CO₂ ou du R744 comme réfrigérant, **caractérisé en ce que** le dispositif d'entretien est raccordé au côté basse pression ou au côté haute pression de la climatisation, par le biais d'un accouplement côté basse pression et d'un accouplement côté haute pression, pour l'établissement d'un circuit, et **en ce que** le procédé comprend l'étape de transfert de réfrigérant dans la climatisation, d'un état de phase II dans les limites d'une courbe de vapeur humide vers un état de phase II^{E} à l'extérieur de la courbe de vapeur humide au moyen d'une opération de circulation, l'enthalpie spécifique dans l'état de phase II^{E} présentant une valeur dont l'isenthalpique se trouve entièrement à l'extérieur de la plage de glace sèche.

12. Procédé selon la revendication 11, dans lequel l'opération de circulation à partir de l'état de phase II comprend les changements d'état suivants :
a. réchauffement essentiellement isobare du réfrigérant jusqu'à la sortie de la courbe de vapeur humide (II => III),
b. compression essentiellement isentropique, sur une surpression supérieure à la pression de l'état de phase II initial, et de préférence supérieure à la pression critique du réfrigérant (III => IV),
c. expansion essentiellement isenthalpique (IV => V), et
d. mélange avec le réfrigérant dans la climatisation (V => II').

13. Procédé selon la revendication 11 ou 12, comprenant les étapes suivantes avant l'étape de circulation :
- évacuation d'une région fermée du dispositif d'entretien, laquelle est raccordée au côté basse pression de la climatisation et isolée de celle-ci par une soupape fermée (101) ;
- ouverture d'une liaison fluidique entre la région évacuée du dispositif d'entretien et le système fluidique de la climatisation (expansion I => II).

14. Procédé selon l'une des revendications 11 à 13, comprenant l'étape d'aspiration du réfrigérant hors de la climatisation, vers un réservoir, suite à l'opération de circulation.

15. Procédé selon l'une des revendications 11 à 14, **caractérisé en ce que** pendant le procédé, de l'huile usée est séparée et la quantité d'huile usée isolée de la climatisation est déterminée.

16. Procédé selon l'une des revendications 11 à 15, comprenant en outre l'étape de vidange du système à l'aide d'une pompe à vide, suite à l'évacuation du réfrigérant et à l'aspiration de celui-ci, le cas échéant.

17. Procédé selon la revendication 15 ou 16, **caractérisé en ce que** suite à l'évacuation du réfrigérant et avant un nouveau remplissage de la climatisation, de l'huile neuve est introduite dans le système fluidique vidangé, la quantité d'huile neuve étant déterminée à l'aide de la quantité d'huile usée séparée.
